# EUROPÄISCHE PATENTSCHRIFT

(11) **EP 2 514 078 B1**
(45) Veröffentlichungstag und Bekanntmachung des Hinweises auf die Patenterteilung: **01.05.2019**
(21) Anmeldenummer: 10708494.9
(22) Anmeldetag: 01.03.2010
(51) Int. Cl.: H02K 11/00

(54) **VERFAHREN ZUR ÜBERWACHUNG DER ERDUNGSFUNKTION UND VERWENDUNG DES VERFAHRENS**
METHOD FOR MONITORING THE GROUNDING FUNCTION AND USE OF THE METHOD
PROCÉDÉ POUR SURVEILLER LA FONCTION DE MISE À LA TERRE ET UTILISATION DU PROCÉDÉ

(43) Veröffentlichungstag der Anmeldung: 24.10.2012
(73) Patentinhaber: Siemens Aktiengesellschaft, 80333 München (DE)
(72) Erfinder: HASSEL, Jörg, 91058 Erlangen (DE); PROBOL, Carsten, 91054 Buckenhof (DE); STECKENBORN, Arno, 13589 Berlin (DE); THEILE, Oliver, 13437 Berlin (DE); TISCHMACHER, Hans, 91207 Lauf (DE)
(86) Internationale Anmeldenummer: PCT/EP2010/001258
(87) Internationale Veröffentlichungsnummer: WO 2011/107109

(56) Entgegenhaltungen:
- EP-A1- 0 271 678
- EP-A1- 0 494 446
- DE-A1- 19 742 622
- US-A1- 2005 184 751

## Beschreibung

Die vorliegende Erfindung betrifft ein Verfahren zum Überwachen einer Erdungsfunktion einer elektrischen Maschine mit einem Stator, einem Rotor, einer Welle, an der der Rotor befestigt ist, und einer Erdungseinrichtung zum Erden der Welle.

Elektrische Maschinen können Erdungsbürsten besitzen, um beispielsweise den Läufer potentialfrei zu halten (z. B. bei Windkraftanlagen). Darüber hinaus sind elektrische Maschinen beispielsweise bei Schienenfahrzeugen im Einsatz, bei denen der Betriebsstrom über Erdungsbürsten vom Rotor abgeführt wird. Aus Funktions- beziehungsweise Schutzgründen ist es stets notwendig, die Erdungsfunktion der Erdungsbürsten zu überwachen.

Erdungsbürsten können zurzeit nur über mechanische Systeme auf die Unterschreitung einer Restlänge hin überwacht werden. Dabei wird über einen Mikroschalter ein Kontakt geöffnet, sobald die Bürste eine Mindestlänge unterschreitet. Eine Überwachung der Erdungsfähigkeit von Erdungsbürsten ist zurzeit nicht möglich.

Bürsten werden in der Technik, wie oben bereits angedeutet wurde, generell zur Übertragung von elektrischer Energie auf bewegte Teile des Gesamtsystems verwendet. Dabei wird eine Verbindung über Schleifkontakte hergestellt, die einem Verschleiß unterliegen. In vielen Anwendungen (z. B. Bahnantriebe) muss der Motorkreis zum Unterwerk über das Gleis geschlossen werden. Da das Gleis die Funktion des Rückleiters hat, muss der gesamte Motorstrom über das Radlager hinweg auf den Rad-Schiene-Kontakt übertragen werden. Um eine Stromführung über das Wälzlager und eine schnelle Zerstörung dieses Bauteils zu vermeiden, wird das Lager durch einen Bürsten-Schleifkontakt überbrückt. Hierbei ist es für eine hohe Lebensdauer wichtig, die Erdungsfunktion auf Bürstenfeuer, Funktion der Erdungsbürste und nicht spezifizierte hohe Ströme in Erdungssystemen zu überwachen.

Erdungsbürsten werden zurzeit nicht kontinuierlich überwacht. Aufgrund der begrenzten Lebensdauer und von Ausfällen vor der spezifizierten Lebensdauer, z. B. bei elektrischer und mechanischer Überlastung, werden Erdungsbürsten zum Teil redundant ausgeführt und regelmäßig überprüft. Dabei wird beispielsweise die Stromzuführung von den Achswellen über spezielle Kontaktbürsten abgenommen und nicht über die Lager der Wellen. Im Allgemeinen dienen bei einer vierachsigen Lok drei Achsen der Stromzufuhr und die vierte Achse der Erdung der Lok. Die Bürste der vierten Achse ist mit dem Gehäuse der Lok verbunden. Es wird die Summe der Ströme der drei Erdungsbürsten mit dem Fahrstrom verglichen. Ist die Differenz zwischen Fahrstrom und Erdstrom der drei Achsen nicht null (Fehlerstrom), so muss ein Defekt am Erdungssystem vorliegen. Auf diese Wiese wird die Funktion eines Fehlerstromschutzschalters realisiert, welcher dann im Falle eines Erdschlusses (Gehäuseschluss) den Hauptschalter der Lok auslöst.

Im Falle der Erdung von elektrischen Maschinen können bei zu später Instandsetzung einer defekten Erdungsbürste an einer Motor- oder Generatorwelle bereits Folgeschäden verursacht worden sein. Ein Beispiel hierfür sind unzulässig hohe Stromübergänge in Wälzlagern (Lagerströme). Auch Personenschutz und Schutz von Wälzlagern an angeschlossenen Maschinen (z. B. eines Getriebes oder einer Messeinrichtung) können betroffen sein. Darüber hinaus können auch unbeabsichtigte hohe Ströme im Erdungssystem zu Problemen führen. Diese Ströme können durch magnetische Induktion, Unterschiede im elektrischen Potential oder Fremdströme im Gleis bei Schienenfahrzeugen hervorgerufen werden und Lagerströme oder Fehlfunktionen durch elektromagnetische Beeinflussung verursachen.

Aus der EP 0 271 678 ist es bereits bekannt zum Abbau von Spannungsspitzen zusätzlich zur Erdungsbürste auf der Antriebsseite eine zweite Erdungsbürste auf der Nicht-Antriebsseite vorzusehen.

Auch die DE 197 42 622 beschreibt eine ähnliche Vorrichtung, bei der sowohl auf Antriebsseite als auch auf der Nicht-Antriebsseite (hier Turbinen- und Erreger-Seite genannt) Kohlebürsten angebracht sind, wobei auf der Erregerseite eine Strom-Messeinrichtung angeschlossen ist.

EP 0 494 446 beschreibt ein elektrisch isoliertes Wälzlager, insbesondere bei einem Schienenfahrzeug mit einer Erdungseinrichtung und einem Schutzwiderstand zur Verhinderung von Stromfluß im Radlager.

Die Aufgabe der vorliegenden Erfindung besteht darin, die Erdungsfunktion einer Erdungseinrichtung einer elektrischen Maschine besser zu überwachen.

Erfindungsgemäß wird diese Aufgabe gelöst mit einem Verfahren welches die Merkmale des Patentanspruchs 1 aufweist und durch die Verwendung dieses Verfahrens zur Überwachung der Erdungsfunktion eines Schienenfahrzeugs gemäss den Ansprüchen 2 und 3.

In vorteilhafter Weise wird also der Erdungsstrom von einer elektrischen Maschine erfasst, dessen Art und/oder Größe Rückschlüsse auf die Erdungsfunktion der Erdungseinrichtung zulassen. Mit der kontinuierlichen Überwachung des Erdungsstroms kann somit eine kontinuierliche Überwachung der Erdungsfunktion gewährleistet werden.

Vorzugsweise ist der Erdungsstrom mit der Messeinrichtung berührungslos messbar. Insbesondere kann mit der Messeinrichtung ein von dem Erdungsstrom verursachtes Magnetfeld oder elektrisches Feld erfassbar sein. Mit dieser berührungslosen Messmethode ist ein verschleißloses Messen möglich. Alternativ kann die Messeinrichtung eine Stromzange aufweisen. Damit ist ein störungsloses Messen unabhängig von äußeren elektrischen Feldern und Magnetfeldern möglich.

Der Erdungsstrom wird mit der Messeinrichtung in einem Frequenzbereich von 10 kHz bis 10 MHz gemessen. In diesem Bereich ergibt sich meist eine ausreichend hohe Einkopplung und die Ausbreitungseffekte spielen noch keine wesentliche Rolle.

Die Erdungseinrichtung weist eine Erdungsbürste auf, deren Erdungsstrom indirekt durch die an ihr abfallende Spannung von der Messeinrichtung bestimmt wird. Auf diese Weise lässt sich die Qualität der Erdungsbürste sehr genau überwachen. Ferner kann die Messeinrichtung einen Shunt-Widerstand aufweisen, über den der Erdungsstrom fließt, welcher von der Messeinrichtung gemessen wird. Ein derartiger Messwiderstand ist leicht in das System zu integrieren, und die über ihm abfallende Spannung ist ebenso leicht überwachbar.

In einer bevorzugten Anwendung ist ein Schienenfahrzeug mit der oben genannten elektrischen Maschine ausgerüstet, und das Schienenfahrzeug besitzt außerdem ein Radlager, das von der Erdungseinrichtung elektrisch überbrückt wird, so dass ein Erdungsstrom der elektrischen Maschine bestimmungsgemäß über die Erdungseinrichtung und nicht über das Radlager abfließt. Somit können Lagerströme zielgerichtet vermieden werden.

In einer speziellen Ausführungsform weist das Schienenfahrzeug einen Schutzwiderstand gegen hohe Ströme auf, wobei der Erdungsstrom über den Schutzwiderstand läuft und die Messeinrichtung den Erdungsstrom in dem Schutzwiderstand misst bzw. bestimmt.

Die vorliegende Erfindung wird nun anhand der beigefügten Zeichnungen näher erläutert, in denen zeigen:
FIG 1 eine Skizze einer elektrischen Maschine mit Erdungs- und Überwachungseinrichtung und
FIG 2 eine Prinzipskizze zum Überwachen der Erdungsfunktion einer Erdungseinrichtung einer elektrischen Maschine.

Die nachfolgend näher geschilderten Ausführungsbeispiele stellen bevorzugte Ausführungsformen der vorliegenden Erfindung dar.

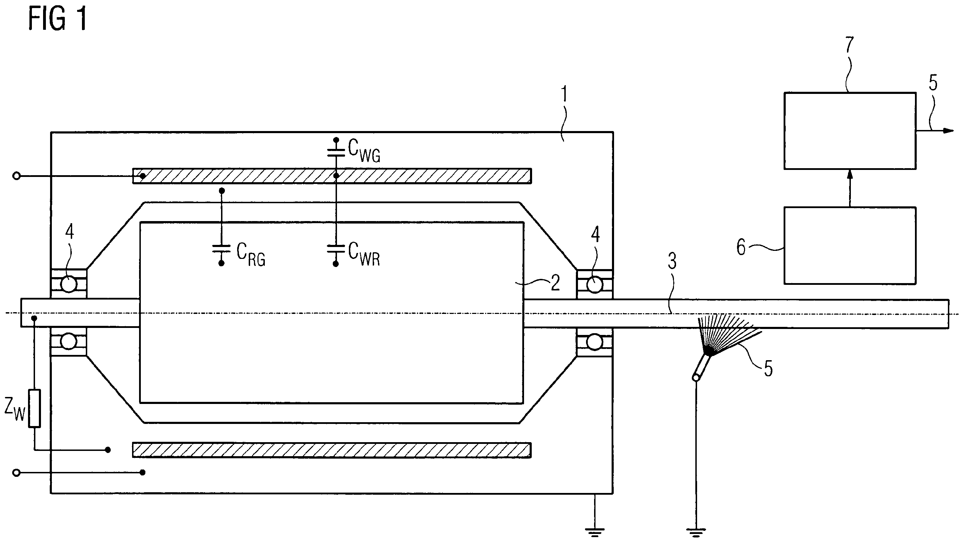

In dem Beispiel von Fig. 1 ist eine elektrische Maschine, hier ein Elektromotor, dargestellt, die einen Stator 1 und einen Rotor 2 aufweist. Der Rotor 2 ist auf eine Welle 3 montiert. Die Welle 3 ist mit Hilfe zweier Lager 4 an dem Stator 1 gelagert.

In der elektrischen Maschine sind außerdem Ersatzschaltbildkomponenten zur Bestimmung der Lagerströme eingezeichnet. Zum einen besteht eine Kapazität CWG zwischen den Wicklungen des Stators und dem Gehäuse. Außerdem besteht eine Kapazität CWR zwischen den Wicklungen des Stators und dem Rotor. Darüber hinaus ergibt sich eine Kapazität CRG zwischen dem Rotor und dem Gehäuse. Zwischen der Welle 3 und dem Gehäuse kann außerdem eine Impedanz Zw gemessen werden. Eine bei Umrichterbetrieb übliche Common-Mode-Spannung an den Wicklungen des Stators wird über den kapazitiven Spannungsteiler auf die Welle "geteilt" (BVR). Die Folge sind Lagerspannungen. Wenn der Schmierfilm im Lager die Spannung nicht mehr halten kann, entsteht ein Lichtbogen, der zu Lagerströmen führt. Aus Fig. 1 ist außerdem ersichtlich, dass das Gehäuse der elektrischen Maschine geerdet ist. Darüber hinaus wird auch die Welle 3 mit Hilfe einer Bürste 5
geerdet. Gegebenenfalls besitzt ein Motor selbst keine Erdungsbürste, aber die elektrische Maschine insgesamt besitzt z. B. an einem Radsatz eine Erdungseinrichtung, die zu überwachen ist. Die Erdungsfunktion der Bürste 5 wird hier berührungslos mit Hilfe einer Messeinrichtung 6 und einer Überwachungseinrichtung 7 überwacht. Die Überwachungseinrichtung 7 gibt ein entsprechendes Überwachungssignal S nach außen ab, mit dem entweder die elektrische Maschine gesteuert wird oder dem Betreiber eine entsprechende Nachricht übermittelt wird.

Trotz der bereits seit Jahrzehnten bestehenden Problematik, die Erdungsfunktion ausreichend überwachen zu können, gab es bislang keine wirklich zufriedenstellende Abhilfe hierfür. Seitens der Erfinder wurde nun erkannt, dass die verbreitete Annahme, über eine Erdungsbürste falle außer am Schleifkontakt keine Spannung ab, falsch ist. Damit lässt sich nun eine kontinuierliche Überwachung der Erdungsfunktion realisieren.

Die Realisierung der Überwachung der Erdungsbürste bzw. Erdungsfunktion kann beispielsweise mit einem Messsystem erfolgen, welches in der Lage ist, berührungslos AC- und DC- Spannungspotenziale zu detektieren. Durch Nutzung, z. B. Anbringen dieses Sensors an der feststehenden Lagerschale des Stators der elektrischen Maschine, kann ein auf der Welle anstehendes Potenzial vor dem Lagerstromereignis erkannt werden. Wenn die Bürste das Potenzial nicht mehr ableitet, kann somit die Funktion der Bürste überwacht werden.

Ein von dem Erdungsstrom resultierender Spannungsabfall kann beispielsweise an Teilen einer Standard-Erdungsbürste 5 oder eines zusätzlichen Shunt-Widerstands gemessen werden. Der Spannungsabfall ist dann beispielsweise ein Indiz dafür, ob die Bürste noch lang genug bzw. verschmutzt ist. Besonders gute Ergebnisse lassen sich erzielen, wenn ein Spannungsabfall bei bestimmten Frequenzen gemessen wird, wie unten näher erläutert werden wird.

Eine weitere Realisierung der Überwachung kann darin bestehen, dass ein Spannungsabfall über einen betriebsmäßigen Erdungswiderstand beobachtet wird. Ein solcher Erdungswiderstand ist beispielsweise ein Schutzwiderstand in einer Schutzerdung, z. B. 50mOhm bei Bahnfahrzeugen. Fällt die Spannung an diesem Schutzwiderstand unter einen bestimmten Schwellwert, der den Betriebszustand berücksichtigen muss ("sind Störer eingeschaltet?") und Frequenzbereiche oder Zeitverläufe bzw. Pulsformen berücksichtigen kann, so ist die Erdung fehlerhaft.

In einer Realisierungsform kann für die Messung des Erdungsstroms eine separate Messbürste vorgesehen sein. In einer weiteren Ausführungsform wird eine einzige Bürste sowohl für die Erdung als auch für die Messung benutzt. In diesem Fall kann ein Umschalter vorgesehen sein, um zwischen dem allgemeinen Betriebsmodus und einem Messmodus hin- und herzuschalten. Bei einer anderen Ausführungsform einer elektrischen Maschine sind mehrere Erdungsbürsten vorhanden und eine davon wird (auch) zur Messung verwendet. Unabhängig davon kann zur Überwachung der Erdungsfunktion auch ein Längensensor zum Überwachen der Bürstenlänge vorhanden sein.

Die Überprüfung der Güte der Erdungsfunktion kann für die Radlager von Bedeutung sein. Insbesondere bei Schienenfahrzeugen ist eine derartige Überwachung der Radlager notwendig. Hier überbrückt die Erdungsbürste das Radlager und dient dem Fahrstrom über den Rad-Schiene-Kontakt als Rückleitung. Bei einem Defekt steigt der Widerstand des Erdkontakts an und es könnte zu einem vermehrten Stromdurchgang durch das Radlager selber kommen. Dies würde das Lager binnen kurzer Zeit zerstören.

Auch etwaige Stromschleifen innerhalb der elektrischen Maschine können zu ungewollten Effekten führen. Daher werden Stromschleifen nach Möglichkeit vermieden. Durch das Messen der Erdungsströme können unter Umständen auch Stromschleifen erkannt werden. Diese Zusatzfunktion bei der Überwachung der Erdungsgüte kann bei manchen Anwendungen durchaus vorteilhaft sein.

Erdungsbürsten stellen für die über sie abfließenden Ströme eine Impedanz dar. Diese wird gebildet aus: dem Material, dem Schleifkontakt, der Kupferlitze, welche im Stampfkontakt im Bürstenmaterial sitzt, dem Stampfkontakt (dieser kann im Betrieb durch Rütteln schlechter werden) und dem Kontakt Litze-Motorgehäuse. Eine mögliche Verschlechterung der Erdungsfunktion im laufenden Betrieb geht einher mit einer Verschlechterung der Gleitkontaktbedingungen. Staub, Öl, Korrosion und anderes können der Grund für die Veränderung sein. Eine Verschlechterung der Kontaktbedingungen wird immer mit einer Veränderung des über die Bürste fließenden Stroms verbunden sein. Wird dieser Strom gemessen (z. B. über einen Shunt-Widerstand) und mit den Werten bei Inbetriebnahme des Antriebs (ideale Kontaktbedingungen) in Beziehung gesetzt, lässt sich daraus eine Aussage über die Erdungsfähigkeit der Bürste ableiten. Neben dem reinen Messwert in Form von RMS (Route Mean Square, Effektivwert) und PK-Werten (Peak Wert, Spitzenwert), können hier mit dem erfindungsgemässen Verfahren auch Histogramm-Klassifizierungen des Stroms über einen definierten, längeren Zeitraum ins Verhältnis gesetzt werden.

Bei Verwendung eines Messsystems wie einer Vorrichtung zur Überwachung von Lagerströmen, z. B. dem "Lagerstromsensor", welcher auf die Messungen der reinen Lagerspannung angewiesen ist, ist es möglich, die Mess- und Erdungsaufgabe mittels eines Schalters voneinander zu trennen. Zur Zeit ist der Lagerstromsensor nur durch eine potenzialbehaftete Spannungsmessung mittels Bürsten nutzbar. Eine Bürste ausschließlich für Messzwecke wirkt sich jedoch nachteilig auf Volumen und Kosten einer elektrischen Maschine aus.

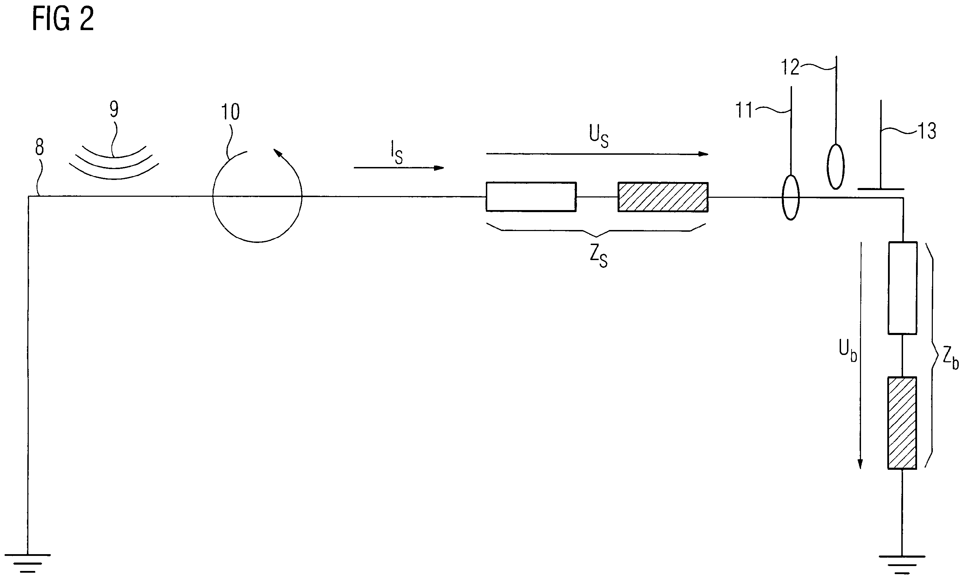

Im Zusammenhang mit Fig. 2 wird nun näher erläutert, wie die Messung des Erdungsstroms prinzipiell realisiert sein kann. Hierzu ist ein elektrischer Leiter 8 (z. B. für Schutzerde) dargestellt, der beidseitig geerdet ist. Durch ein elektrisches Feld 9 bzw. ein magnetisches Feld 10 kann in dem Leiter 8 ein Streustrom IS induziert werden. Insbesondere durch parasitäre induktive Kopplungen (d. h. über das magnetische Streufeld 10 z. B. von Motoren oder Leitungen gegen Strukturen, die mit der Schutzerde elektrisch verbunden sind) oder parasitären kapazitiven Kopplungen (d. h. über das elektrische Streufeld 9 z. B. zwischen der Stator-Wicklung von Motoren und dem Motor-Gehäuse oder zwischen einem Leiter eines Motorkabels und seinem Schirm) führt der Schutzleiter 8 stets hochfrequente elektrische Streuströme IS, ohne dass ein Isolationsfehler vorliegt. Diese hochfrequenten Ströme führen zu einem Spannungsabfall über eine Erdungsbürste, einem zusätzlichen Shunt-Widerstand oder einem Schutzwiderstand in der Schutzerde bzw. dem Schutzleiter 8. Die Erdungsbürste ist in Fig. 2 durch eine Impedanz Zb symbolisiert. Sie besitzt in der Regel einen komplexen Anteil, z. B. eine parasitäre Induktivität. Über sie lässt sich ein Spannungsabfall Ub messen.

Der Erdungsstrom lässt sich aber auch, wie oben bereits erwähnt, mit Hilfe eines zusätzlichen Shunt-Widerstands oder eines Schutzwiderstands, die in Fig. 2 mit der Impedanz Zs symbolisiert sind, ermitteln. Die Impedanz besitzt auch einen komplexen Anteil, z. B. eine parasitäre Induktivität. Zur Bestimmung des Erdungsstroms wird auch hier der Spannungsabfall Us gemessen.

Der Spannungsabfall wird in einem Frequenzbereich von 10 kHz bis 10 MHz gemessen. Bei noch tieferen Frequenzen ist die Einkopplung oft noch gering (Ausnahme: Induktive Einkopplungen großer Ströme z. B. bei der Motor-Frequenz). Bei höheren Frequenzen kann durch Ausbreitungseffekte ein Strom im Schutzwiderstand fließen, obwohl die Erdungsbürste defekt ist (Beispiel: Lambda-Viertel-Transformator; Sonderfall A/4: bei 30 MHz "sähe" ein Erdungswiderstand mit einer 2,5 m langen Leitung einen Kurzschluss gegen Erde, auch wenn die Erdungsbürste defekt wäre und einen Leerlauf gegen Masse darstellen würde). Mittels aufwändiger Technik/Auswertung wäre jedoch auch eine Messung bei höheren Frequenzen möglich.

Alternativ kann der Strom im Schutzleitungssystem auch direkt mittels eines Stromsensors gemessen werden. Diese Streustrommessung auf der Schutzerde kann beispielsweise mit einer Stromzange erfolgen, die jedoch sehr aufwändig ist. Der Stromsensor ist in Fig. 2 mit dem Bezugszeichen 11 gekennzeichnet (Nicht Teil der beanspruchten Erfindung).

Des Weiteren kann der Erdungsstrom auch indirekt über seine Auswirkungen, nämlich das elektrische Feld und das magnetische Feld gemessen werden. Dazu sind in Fig. 2 ein Sensor 12 für das magnetische Feld und ein weiterer Sensor 13 für das elektrische Feld angedeutet. (Nicht Teil derbeanspruchtenErfindung).

Ungewollte oder sogar unzulässig hohe elektrische Ströme in Stromschleifen, beispielsweise aufgrund von elektrischen Feldern können ebenfalls durch Strommessungen oder indirekte Messungen über das Magnetfeld oder Spannungsabfall an einem Shunt-Widerstand gemessen werden.

Durch die somit mögliche kontinuierliche Überwachung können Schäden und gefährliche Zustände der elektrischen Maschine vermieden werden. Ferner können Wartungsintervalle verlängert werden. Beispielsweise ist bei Windkraftanlagen eine Erdung der Generatorwelle zur Vermeidung von hohen Lagerströmen in den Wälzlagern erforderlich. Eine Fehlfunktion kann so entdeckt werden, bevor das Lager durch Riffelbildung geschädigt wird. Dies wird letztlich dadurch erreicht, dass der gemessene Erdungsstrom durch nachgeschaltete Elektronik bzw. Logik ausgewertet wird. Gegebenenfalls kann dann entsprechende Information beispielsweise bezüglich Wartungsintervallen bereitgestellt werden. Optional kann der gemessene Strom auch direkt zur Steuerung der elektrischen
Maschine beispielsweise zu einer Zwangsabschaltung genutzt werden.

### Bezugszeichenliste

- 1: Stator
- 2: Rotor
- 3: Welle
- 4: Lager
- 5: Bürste
- 6: Messeinrichtung
- 7: Überwachungseinrichtung
- 8: Leiter
- 9: elektrisches Feld
- 10: magnetisches Feld
- 11: Stromsensor
- 12: Sensor
- 13: Sensor
- C_{WG}: Kapazität
- C_{WR}: Kapazität
- C_{RG}: Kapazität
- S: Überwachungssignal
- Z_{b}, Z_{w}, Zₛ: Impedanz
- U_{b}, Uₛ: Spannungsabfall

## Patentansprüche

1. Verfahren zum Überwachen einer Erdungsfunktion einer elektrischen Maschine, die einen Stator (1), einen Rotor (2), eine Welle (3), an der der Rotor (2) befestigt ist, und eine Erdungseinrichtung (5) zum Erden der Welle aufweist,
wobei die Erdungseinrichtung (5) eine Erdungsbürste aufweist, deren Erdungsstrom von einer Messeinrichtung (6) gemessen wird
**gekennzeichnet durch**
- Messen eines Erdungsstroms der Erdungseinrichtung (5) wobei die Messeinrichtung (6) den durch den Erdungsstrom erzeugten Spannungsabfall über der Erdungsbürste, einem zusätzlichen Shunt-Widerstand oder einem Schutzwiderstand in einem Frequenzbereich von 10 kHz bis 10 MHz misst
- Bereitstellen eines entsprechenden Messwerts sowie
- Überwachen einer Erdungsfunktion der Erdungseinrichtung (5) anhand des Messwerts, wobei
- der Messwert in Form von Histogramm-Klassifizierungen des Stroms mit den Werten bei Inbetriebnahme des Antriebs ins Verhältnis gesetzt werden um daraus eine Aussage über die Erdungsfähigkeit der Bürste abzuleiten.

2. Verwendung des Verfahrens gemäss Anspruch 1 zur Überwachung der Erdungsfunktion einer elektrischen Maschine eines Schienenfahrzeugs, die
- einen Stator (1),
- einen Rotor (2),
- eine Welle (3), an der der Rotor (2) befestigt ist, und
- eine Erdungseinrichtung (5) zum Erden der Welle aufweist,
wobei die Erdungseinrichtung (5) eine Erdungsbürste aufweist, deren Erdungsstrom von **der** Messeinrichtung (6) gemessen wird, wobei das Schienenfahrzeug ein Radlager aufweist, das die Erdungseinrichtung (5) elektrisch überbrückt, so dass ein Erdungsstrom der elektrischen Maschine bestimmungsgemäss über die Erdungseinrichtung (5) und nicht über das Radlager abfliesst.

3. Verwendung gemäss Anspruch 2, wobei das Schienenfahrzeug einen Schutzwiderstand (Zₛ) gegen hohe Ströme aufweist, wobei der Erdungsstrom über den Schutzwiderstand läuft und die Messeinrichtung (6) den Erdungsstrom in dem Schutzwiderstand misst.

## Claims

1. Method for monitoring an earthing function of an electric machine which has a stator (1), a rotor (2), a shaft (3) to which the rotor (2) is fastened, and an earthing device (5) for earthing the shaft,
wherein the earthing device (5) has an earthing brush, the earth current of which is measured by a measuring device (6), **characterised by**
- measurement of an earth current of the earthing device (5), wherein the measuring device (6) measures the voltage drop produced by the earth current across the earthing brush, an additional shunt resistance or a protective resistance in a frequency range from 10 kHz to 10 MHz,
- provision of a corresponding measured value and
- monitoring an earthing function of the earthing device (5) on the basis of the measured value, wherein
- the measured value in the form of histogram classifications of the current is correlated with the values pertaining on commissioning of the drive in order to derive a statement therefrom about the earthing capability of the brush.

2. Use of the method according to claim 1 for monitoring the earthing function of an electric machine of a rail vehicle which has
- a stator (1),
- a rotor (2),
- a shaft (3) to which the rotor (2) is fastened, and
- an earthing device (5) for earthing the shaft,
wherein the earthing device (5) has an earthing brush, the earthing current of which is measured by the measuring device (6),
wherein the rail vehicle has a wheel bearing which the earthing device (5) bridges electrically, such that an earth current of the electric machine flows away as intended by way of the earthing device (5) and not by way of the wheel bearing.

3. Use according to claim 2, wherein the rail vehicle has a protective resistance (Z_{S}) against high currents, wherein the earth current flows by way of the protective resistance and the measuring device (6) measures the earth current in the protective resistance.

## Revendications

1. Procédé destiné à la surveillance d'une fonction de mise à la terre d'une machine électrique, qui présente un stator (1), un rotor (2), un arbre (3), auquel le rotor (2) est fixé, et un dispositif de mise à la terre (5) destiné à la mise à la terre de l'arbre, dans lequel le dispositif de mise à la terre (5) présente un balai de mise à la terre, dont le courant de mise à la terre est mesuré par un dispositif de mesure (6), **caractérisé par**
- la mesure d'un courant de mise à la terre du dispositif de mise à la terre (5), dans lequel le dispositif de mesure (6) mesure la chute de tension générée par le courant de mise à la terre via le balai de mise à la terre, d'une résistance shunt supplémentaire ou d'une résistance de protection dans une plage de fréquences de 10 kHz à 10 MHz
- la mise à disposition d'une valeur de mesure correspondante ainsi que
- la surveillance d'une fonction de mise à la terre du dispositif de mise à la terre (5) à l'aide de la valeur de mesure, dans lequel
- la valeur de mesure en forme de classifications en histogramme du courant est mise en rapport avec les valeurs lors de la mise en service de l'entraînement pour dériver une information relative à la capacité de mise à la terre du balai.

2. Utilisation du procédé selon la revendication 1 destiné à la surveillance de la fonction de mise à la terre d'une machine électrique d'un véhicule ferroviaire, qui présente
- un stator (1),
- un rotor (2),
- un arbre (3) auquel le rotor (2) est fixé, et
- un dispositif de mise à la terre (5) destiné à la mise à la terre de l'arbre,
dans lequel le dispositif de mise à la terre (5) présente un balai de mise à la terre, dont le courant de mise à la terre est mesuré par le dispositif de mesure (6), dans lequel le véhicule ferroviaire présente un palier de roue qui ponte électriquement le dispositif de mise à la terre (5), de sorte qu'un courant de mise à la terre de la machine électrique s'écoule de manière conforme via le dispositif de mise à la terre (5) et pas via le palier de roue.

3. Utilisation selon la revendication 2, dans lequel le véhicule ferroviaire présente une résistance de protection (Zₛ) contre des courants élevés, dans lequel le courant de mise à la terre circule via la résistance de protection et le dispositif de mesure (6) mesure le courant de mise à la terre dans la résistance de protection.
